# EUROPEAN PATENT SPECIFICATION

(11) **EP 3 224 026 B1**
(45) Date of publication and mention of the grant of the patent: **28.07.2021**
(21) Application number: 15834677.5
(22) Date of filing: 26.11.2015
(51) Int. Cl.: B29C 67/00, A23P 30/00

(54) **METHOD FOR THE PRODUCTION OF AN EDIBLE OBJECT USING SLS**
VERFAHREN ZUR HERSTELLUNG EINES ESSBAREN OBJEKTS MITTELS SLS
PROCÉDÉ DE PRODUCTION D'UN OBJET COMESTIBLE OBTENU PAR FSL

(30) Priority: 26.11.2014 EP 14195016
(43) Date of publication of application: 04.10.2017
(73) Proprietor: Stichting Wageningen Research, 6708 PB Wageningen (NL)
(72) Inventor: NOORT, Martijn Willem-Jan, 2595 DA 's-Gravenhage (NL); DIAZ, Jerome Villarama, 2595 DA 's-Gravenhage (NL); VAN BOMMEL, Kjeld Jacobus Cornelis, 2595 DA 's-Gravenhage (NL); RENZETTI, Stefano, 2595 DA 's-Gravenhage (NL); HENKET, Jolanda, 2595 DA 's-Gravenhage (NL); HOPPENBROUWERS, Marcus Benedictus, 2595 DA 's-Gravenhage (NL)
(74) Representative: V.O.
(86) International application number: PCT/NL2015/050831
(87) International publication number: WO 2016/085344

(56) References cited:
- WO-A1-2014/193226
- US-A1- 2008 260 918
- Anonymous: "Interview: Kjeld van Bommel - 3Digital Cooks", , 12 November 2013 (2013-11-12), XP055114256, Retrieved from the Internet: URL:http://3digitalcooks.com/2013/11/inter view-kjeld-van-bommel-tno/ [retrieved on 2014-04-15]
- None

## Description

The invention relates to the field of additive manufacturing (AM, also known as rapid manufacturing, or 3D printing) of edible objects. Particularly, the present invention provides a method for the production of edible objects using selective laser sintering (SLS).

Selective Laser Sintering (SLS) is a technique that uses a high power laser to fuse small particles into a mass that has a 3-dimensional shape. Sintering is defined here as a process where the melted material, either partially or fully melted, connects powder particles together upon cooling. Consolidation requires that the powder bed becomes bound together into the desired shape and with the desired mechanical properties and texture.

The laser selectively fuses powdered material by scanning cross-sections on the surface of a powder bed. In doing so, a consolidated object is build surrounded by lose powder. After each cross-section is scanned, the powder bed is lowered by one layer thickness, a new layer of material is applied on top, and the process is repeated until the shape is completed.

The powdered material used in SLS needs to meet specific requirements in order to successfully form consolidated objects. The powder particles need to - at least partially - melt or flow as a result of the laser energy, to subsequently solidify into a consolidated object. It is known to use binder ingredients to achieve flowability of the composition under SLS conditions. However, the choice of binder ingredients is generally very limited. One of possible reasons is that most food materials - different from non-food polymers - do not have a specified melting point but a long transition. Document WO 2014/193226 A1 discloses a method for the production of an edible object, based on wheat starch or semolina using SLS and water. Document US 2008/260918 A1 discloses spraying a binder having water or oil as a solvent on powder using several techniques to obtain the final product, one of them being SLS.

The present invention provides a method for the production of an edible object, comprising providing an edible powder composition suitable for selective laser sintering and an edible liquid, and subjecting said composition to selective laser sintering (SLS) to obtain the edible object, wherein the edible liquid is provided in the form of droplets on the edible powder composition before subjecting it to the laser irradiation step of the SLS procedure, the method being disclosed in the appended claims.

Disclosed herein is a food product comprising the edible object obtainable by the method of the invention. This food product has advantageously varying microstructures and thus textures and mouthfeel.

The present invention is based on the judicious insight that it is possible to successfully produce 3D edible objects with compositions without binders or with a reduced content of binders. This is achieved by using edible liquid together with an edible powder composition. The edible liquid, preferably in the form of small droplets, helps consolidate the powder into the pre-defined three dimensional shape.

By adding water or other liquids comprising water to the powder before the irradiation step, the consolidation of objects during the irradiation step of the Selective Laser Sintering can be improved and controlled. In this way powders that can not be sintered as such may become suitable for use in a printing process. Furthermore, more degrees of freedom in the powder formulation and hence in the build object are possible. Finally, the final quality, e.g. texture, mechanical strength, of the build object may be improved. Without wishing to be bound by theory, it is further believed that the application of water to biopolymers such as starch before subjecting these to laser treatment causes (at least partial) gelation thereof, which leads to the improvement of the texture but also the increase of nutritional value of the final object.

In the method according the invention, the edible liquid is any edible liquid comprising water. In some embodiments, the edible liquid comprises water as the only liquid.

Suitable examples of edible liquids include aqueous solutions (sugars, carbohydrates, proteins, hydrocolloids, minerals), honey, glucose syrups.

The edible liquid is provided in an amount of at least 1 wt.% relative to the total weight of the powder composition and the liquid, preferably in the range 5-80 wt.%. The exact amount may depend on the powder composition and properties. As a general rule, highly soluble powders require less liquid, less soluble powders - more liquid, in case they are soluble in the liquid that is applied. For example, low Mw maltodextrins may require only a low amount of liquid (5 wt.% liquid to 95 wt.% solids). Other powders, e.g. cereal powders may need 10-20 wt.% liquid, and even up to 60 wt.% liquid/40 wt.% solid. The amount of liquid is considered ideal when the powder is brought closer to Tg or Tm or above Tg before applying laser, in order to assist the sintering (melting) process by means of laser. Without wishing to be bound by theory, it is believed by the inventors that the application of the liquid allows mobility in the biopolymers/components of the powder to promote interactions which lead to structure and texture formation before and/or during the laser treatment. The phase transition will occur during the time frame of laser processing or can start earlier, during the application of the liquid. Hence, the sintering/texture formation will be influenced by means of the amount of liquid for a certain powder.

The upper limit can be determined by skilled persons, as too much liquefaction/dissolving of the powder is undesirable as it may lead to flowing, bleeding, or caking of surrounding powder bed.

The edible powder composition comprises at least 10 wt% starch, preferably free-flowing. "Suitable for SLS" means here that the composition does not contain any ingredients that unintentionally or undesirably decompose while exposed to a laser at typical working temperatures and duration used in SLS. Intentional decomposition may take place when using, for example, heat sensitive additives like chemical leavening agents such as carbonates to control porosity. The temperature during SLS is in the range 100-200°C, more typically 140-180°C, and the application time less than 1 sec, preferably less than 500 msec. By way of example, the edible composition may comprise edible compounds such as carbohydrates, starches, sugars, polyols, proteins, fats and their derivatives and minerals, food ingredients such as flours, cereal meals, pulse/legume flours, egg powders, milk powders, dairy powders, cocoa powder, food powders such as powdered fruits and vegetables, powdered meat/fish, cereals, chocolate, nuts, coffee, cheese powders, soup powders. Further suitable edible compounds include any dehydrated and/or powdered (e.g. ground/micronized) food material. As an example, for a cookie type product based on apple pie it can be desirable to use dehydrated apple pie powder.

The edible powder composition may comprise a structural component, which is non-melting at the temperatures below 200°C. Non-melting here means that the structural component does not become flowable under the SLS conditions, that is, under the temperatures below 200°C and within a period of less than 5 sec, more preferably less than 1 sec after or during the laser exposure. Flowability can be directly observed or judged after the heating based on consolidation of the powder. Preferably, the structural component withstands temperatures of up to 200°C without decomposing or melting. Preferably, the composition comprises at least 10 wt.% of starch based on the total weight of the composition, more preferably at least 30 wt.%, yet more preferable at least 40 wt.% or more. Generally, the composition comprises 10-90 wt.% of a structural component, but up to 100% is also possible. A suitable starch based product is wheat flour. In some embodiments, the edible composition essentially consists of the structural component.

For consolidating the structural component under the SLS conditions, a binder can be used. Binder can be defined as a melting ingredient of the composition under the SLS conditions. Particularly, the binder can have the melting temperature Tm or the glass transition temperature Tg in the range 10-200°C and more preferably, the binder undergoes melting or glass transition under SLS conditions, that is within a period of less than 5 sec, more preferably less than 1 sec after or during the laser exposure. Melting temperature (for crystalline compounds) and glass transition temperature (for non-crystalline compounds) can be determined by DSC. In the present description, the melt and glass transition temperatures are measured using a DSC-Q200, TA Instruments made in New Castle, USA, using the heating rate 7.5°C/min.

Essential absence of the (powder) binder in the powder edible composition means that the composition does not comprise a component that is able to become flowable under the temperatures and within the short periods of time used in the laser irradiation step in SLS (e.g. at 140-180°C and in less than 1 sec), or comprises it in an amount of less than 5 wt.% of the total weight of the composition, or even less as described above. Flowable means here having a flowable consistency, and such flowable consistency can usually be directly observed. Flowable includes the states of compounds during melting and glass transition. A good indication for this is a test wherein compounds are subjected to a high temperature for a short period of time and their behaviour with respect to flowability is observed. Also signs of consolidation are observed after heating. A similar test can be used to check which compounds would be suitable as the structural components that are non melting (and non degrading) under the SLS conditions.

However during the experiments the present inventors have found that although using an edible powder composition comprising a binder results in a successfully consolidated object, in some cases the objects obtained were rather fragile and had an unappealing texture (e.g. sandy, gritty). It also appeared very difficult to improve this texture by varying the amounts of the binder present.

It has surprisingly been found by the inventors that the use of binders in powder compositions for SLS comprising a structural component, is not necessary and that a powder composition completely or essentially without binders can still be printed by SLS into a consolidated object. Essentially without means here comprising less than 5 wt.%, preferably less than 1 wt.%, more preferably less than 0.5 wt.%, yet more preferably less than 0.1 wt.% based on the total dry weight of the composition. Without wishing to be bound by theory, it is believed by the inventors that the edible liquid applied to the powder to be sintered before applying the irradiation in the SLS procedure can contribute to providing the necessary mobility of the compounds (e.g. biopolymers) present in the edible composition, particularly the structural component thereof.

The liquid is preferably provided in the form of droplets on the edible powder composition before subjecting it to irradiation by laser in the SLS procedure. The mean droplets volume is preferably less than 0.1 mL, more preferably 1 pL - 0.1 mL, yet more preferably 5 pL - 0.01 mL. The droplets are produced by spraying or printing. Application in the form of droplets, and especially by means of printing, ensures that the remaining powder bed is not subjected to caking and remains in an optimal form for the application of the laser. A preferred form of application by printing is by using an inkjet printer such as available in powder bed printing (PBP) technology.

The edible powder composition used in the present invention is preferably a free-flowing powder. The term "free-flowing powder", as used herein, is well known to those skilled in the art and includes particulate materials that can be poured (e.g., from one vessel having an opening of from about 10 cm² to 50 cm² into another vessel of similar dimensions) without substantial clumping of the particles. In detail, the term "free-flowing" is used for a powdered material that is not sticky, and thus has no or hardly any tendency to agglomerate or to adhere to contact surfaces. The so-called angle of repose, θᵣ, is sometimes used as a measure for the flow properties of powders. The angle of repose is the angle that a cone of powder forms between a flat surface when it is poured onto that surface. Typically, for a free-flowing powder θᵣ is low, e.g. smaller than 30°.

It is also preferred, yet not required, to have an even powder bed. An even powder bed layer is desirable since it influences the laser beam diffraction and ultimately, the sintering of the individual powder particles, thus resulting in a consolidated object from the individual particles.

Apart from the above-mentioned ingredients, the composition may comprise other ingredients that do not influence the melting behaviour of the binder and do not decompose or form undesired reaction products at heating. For example, emulsifiers, antioxidants, flavouring agents, free flowing agents and colouring agents may be used. In addition, ingredients to modulate microstructures and thus textures may also be added.

After carefully removing the printed object from the powder bed, carefully the remaining powder can be removed using a brush. Subsequently, the object can be exposed to further processing such as drying, further heating, steaming, etc, to obtain the desired product composition, product properties and appearance. In this way the moisture content of the final object may be varied (from moist to dry) and the corresponding texture can be varied (for example soft, chewy, hard).

In the present invention use is made of the SLS technology. Any suitable SLS set-up can be used. For example, traditional infra-red CO₂ lasers can be used, but also diode lasers.

The method of the invention can be used to produce a food product comprising the edible object obtainable as described above. Preferably, the food product is a bakery product, a dry mix for beverage, an instant soup or a confectionary product. In some embodiment, the food product is a pasta product.

The present invention is further illustrated by the following experiments, which are not intended to limit the scope of the invention. Throughout the description and the examples all parts and percentages are by weight, unless indicated otherwise.

### Examples

Materials used: wheat flour (Ibis, Meneba, NL), polydextrose (Litesse 2, Danisco), palm oil powder (fully hydrogenated palm oil powder Admul PO58, Kerry), water (miliQ).

### Example 1

The printability by SLS was studied of powders varying in composition. Fixed SLS settings were used: Line distance 0.1 mm; Writing speed 1250 mm/sec; Laser power 50 %. Layer height 0.5 mm, 2 layers were printed. Starting with two powders: durum wheat semolina and soft wheat flour, both powders as such were not printable: the lasering does not result in consolidation at all. The powder becomes brown and eventually burnt because of thermal heating, but the powder particles are not sintered together as they do not melt.

When the two powders were combined with a binder mixture composed of 90 wt.% polydextrose and 10 wt.% palm oil powder, consolidation could be obtained. At 40 wt.% binder in the powder, a fragile object was obtained, at 50 wt.% binder the object was strong and at 60 wt.% binder even stronger.

In an experiment in accordance with the invention, water was applied on the powder just before the laser treatment, to improve powder particles to fuse together and hence improve consolidation. Using an airbrush water was sprayed on the powder just before laser treatment. It was found that this procedure substantially improved the consolidation of the powder. Even the powder without any binder was consolidated. The dry object had a mechanical strength comparable to the powder with 50 wt.% binder. Another advantage of this method is that the texture of the object was improved as it became less tough and more crunchy.

### Example 2

In this example water was applied to the edible compositions (with and without polydextrose used as a binder) by means of inkjet printer Pico XMOD MV100 using the powder bed printing (PBP) technology, which was followed by the SLS. Settings for PBP were as follows: pressure 0.15 bar, move speed 2000 mm/s, print speed 1000 mm/s, # droplets 5 dr/mm, pulse time 1, pulse length 1000 us, shape 40x20 mm/s, # lines 2 or 4 lines/mm. For SLS use was made of EOSint P380 (ex 3T RPD Ltd, UK) equipped with a 50W CO₂ CW laser (@ 100% power), wavelength 10.6 µm. The power can be modulated based on the pattern to be printed. SLS settings were used: Line distance 0.1 mm/s; Writing speed 750-1250 mm/sec; Laser power 50-80 %.

The amount of water applied by PBP was 9 wt.% on dry base (2 lines/mm) or 14 wt.% on dry base (4 lines/mm). The water amount is calculated based on the measured amount of water applied and the weight of the object.

The following protocol was followed to print objects of 40 x 20 mm.
Add powder to the z-stage by hand using a sieve (bottom powder layer must be 2 mm high);
Move the z-stage underneath the roller to equalize the powder (225 rpm, 300 mm/min);
Move the z-stage underneath the Pico XMOD MV100 printing head and start printing milli-Q water;
Move the z-stage to home position and remove the z-stage form the PBP set-up and place into the SLS EOS;
Start printing using the laser;
Place the z-stage back into the PBP set-up and lower the z-stage 0,5 mm;
Apply a new powder layer to the z-stage by hand using a sieve and move the z-stage underneath the roller to equalize the powder (225 rpm, 300 mm/min);
Move the z-stage underneath the Pico XMOD MV100 printing head and start printing milli-Q water;
Move the z-stage to home position and remove the z-stage from the PBP set-up and place into the SLS EOS;
Start printing using the laser;
Carefully remove the printed object by using a flat scoop and carefully remove the remaining powder using a brush.

The SLS printed objects were dried in a stove.

The results are presented in Table 1.

**Table 1**

| | 100% wheat flour | | |
|---|---|---|---|
| | 50% laser power 1250 mm/sec | 80% laser power 1250 mm/sec | 80% laser power 750 mm/sec |
| No water | Not consolidated; black/brown specks | Not consolidated; black/brown specks | - |
| Water 9 wt.% | Consolidated; no burned spots | Consolidated; no burned spots | - |
| Water 16 wt.% | Consolidated; no burned spots | Consolidated; no burned spots | Consolidated; no burned spots |

The results show that applying water to wheat flour facilitates consolidation during SLS without the need for a binder material. Mechanical strength is higher than for a composition comprising 50% flour and 50% binder (90% polydextrose, 10% palm oil powder). The printed objects with water show limited browning, no burning, no smoke formed and no black/brown specks. Some warping occurs which needs optimization.

### Example 3

The procedure of Example 2 was followed for the compositions comprising 50 wt.% wheat flour and 50 wt.% binder (90% polydextrose and 10% palm oil powder). The results are shown in Table 2.

**Table 2**

| | 50 wt.% wheat flour, 50 wt.% binder | | |
|---|---|---|---|
| | 50% laser power | 80% | 80% |
| | 1250 mm/sec laser speed | 1250 mm/sec | 750 mm/sec |
| No water | Consolidated; browning | Consolidated browning | - |
| Water 9 wt.% | Consolidated; no browning | Consolidated; no browning | Consolidated, limited browning |
| Water 16 wt.% | Improved consolidation; no browning | Improved consolidation; no browning | Improved consolidation; limited browning |

This examples shows that the use of the binder improves consolidation and prevents/limits burning. However, the measured mechanical strength of the resulting objects was lower than that of Example 2.

### Example 4

### Mechanical strength measurement

The dried objects prepared in Example 2 and 3 were subjected to the measurement of mechanical strength by SMS Texture Analyzer 3 point bending test (TA-TX3 Stable Microsystems Ltd., probe A/3PB three point bending rig). The force is measured when the sample breaks. The measurement procedure is as follows.
Equipment: TA.XT plus
Attach:
   30kg load cell
   Probe A/3PB three point bending rig
   Holder and determine the distance (2 cm, measured at the bottom of the holder)
TA settings:
   Pre-test speed: 1mm/s
   Test speed: 1mm/s
   Post-test speed: 10mm/s
   Target mode: Distance
   Distance: 6mm
   Trigger type: auto (Force)
   Trigger force: 0.49N
   Break mode: off
   Stop plot at: Target distance
   Tare mode: auto
   Advanced options: on
Calibrate the force using a 2kg weight
Calibrate the height with a 45mm return distance
Place the printed object central on the holder underneath the probe
Run the test
Determine the maximum force (N).

The results are presented in Table 3.

**Table 3**

| | 100% flour 0% binder | 75% flour 25% binder | 50% flour 50% binder |
|---|---|---|---|
| No water | NA* | NA* | 0.72 N |
| Water 9 wt.% | 1.99 N | 2.48 N | 1.04 N |
| Water 16 wt.% | 6.77 N | 1.04 N | 2.62 N |

| | | | |
|---|---|---|---|
| * Could not be measured as the sample was not consolidated or too fragile/broken during preparation | | | |

It can be seen that the sample without the binder has a higher mechanical strength than the sample with 50% of the binder present.

## Claims

1. Method for the production of an edible object, comprising providing an edible powder composition suitable for selective laser sintering and an edible liquid, and subjecting said composition to selective laser sintering (SLS) to obtain the edible object, wherein the edible powder composition comprises a structural component, wherein the edible liquid is provided in the form of droplets on the edible powder composition before subjecting it to the laser irradiation step of the SLS procedure, wherein the droplets are produced by spraying or printing, wherein the edible liquid comprises water, wherein the structural component comprises starch, wherein the temperature during the laser irradiation step of the SLS procedure is in the range 100-200°C and the application time less than 1 sec, wherein the edible powder composition comprises at least 10 wt.% starch.

2. The method according to any one of the preceding claims, wherein the edible powder composition does not comprise components that become flowable under the selective laser sintering conditions.

3. The method according to any one of preceding claims, wherein the mean droplets volume is less than 0.1 mL, preferably 1 pL - 0.1 mL.

4. The method according to claim 1 or 2, wherein the mean droplets volume is 5 pL - 0.01 mL

5. The method according to any one of the preceding claims, wherein the edible liquid is provided in the amount of at least 1 wt.% relative to the total weight of the powder composition and the liquid.

6. The method according to any one of the preceding claims, wherein the edible powder composition comprises a structural component, which is non-melting at the temperatures below 200°C.

7. The method according to any one of the preceding claims, wherein the edible liquid is applied to the edible powder composition by inkjet printing.

8. The method according to any one of the preceding claims, wherein the edible liquid is provided in an amount in the range 5-80 wt.%. relative to the total weight of the powder composition and the liquid.

9. The method according to any one of the preceding claims, wherein the edible powder composition is a free-flowing powder.

## Patentansprüche

1. Verfahren für die Herstellung eines essbaren Objekts, umfassend Bereitstellen einer essbaren Pulverzusammensetzung, geeignet zum selektiven Lasersintern, und einer essbaren Flüssigkeit, und Unterziehen der Zusammensetzung dem selektiven Lasersintern (SLS), um das essbare Objekt zu erhalten, wobei die essbare Pulverzusammensetzung eine Strukturkomponente umfasst, wobei die essbare Flüssigkeit in der Form von Tröpfchen auf der essbaren Pulverzusammensetzung bereitgestellt wird, bevor sie dem Laserbestrahlungsschritt der SLS-Methode unterzogen wird, wobei die Tröpfchen durch Sprühen oder Drucken erzeugt werden, wobei die essbare Flüssigkeit Wasser umfasst, wobei die Strukturkomponente Stärke umfasst, wobei die Temperatur während des Laserbestrahlungsschritts der SLS-Methode in dem Bereich von 100-200 °C und die Anwendungszeit weniger als 1 Sekunde ist, wobei die essbare Pulverzusammensetzung wenigstens 10 Gew.-% Stärke umfasst.

2. Verfahren nach einem der vorhergehenden Ansprüche, wobei die essbare Pulverzusammensetzung keine Komponenten umfasst, die unter den Bedingungen des selektiven Lasersinterns fließfähig werden.

3. Verfahren nach einem der vorhergehenden Ansprüche, wobei das mittlere Tröpfchenvolumen weniger als 0,1 mL, vorzugsweise 1 pL - 0,1 mL ist.

4. Verfahren nach Anspruch 1 oder 2, wobei das mittlere Tröpfchenvolumen 5 pL - 0,01 mL ist.

5. Verfahren nach einem der vorhergehenden Ansprüche, wobei die essbare Flüssigkeit in der Menge von wenigstens 1 Gew.-%, bezogen auf das Gesamtgewicht der Pulverzusammensetzung und der Flüssigkeit, bereitgestellt wird.

6. Verfahren nach einem der vorhergehenden Ansprüche, wobei die essbare Pulverzusammensetzung eine Strukturkomponente umfasst, die bei den Temperaturen unter 200 °C nicht schmilzt.

7. Verfahren nach einem der vorhergehenden Ansprüche, wobei die essbare Flüssigkeit auf die essbare Pulverzusammensetzung durch Tintenstrahldruck aufgebracht wird.

8. Verfahren nach einem der vorhergehenden Ansprüche, wobei die essbare Flüssigkeit in einer Menge in dem Bereich von 5-80 Gew.-%, bezogen auf das Gesamtgewicht der Pulverzusammensetzung und der Flüssigkeit, bereitgestellt wird.

9. Verfahren nach einem der vorhergehenden Ansprüche, wobei die essbare Pulverzusammensetzung ein frei-fließendes Pulver ist.

## Revendications

1. Procédé pour la production d'un objet comestible, consistant à fournir une composition de poudre comestible appropriée pour un frittage sélectif au laser et un liquide comestible, et à soumettre ladite composition au frittage sélectif au laser (SLS) pour obtenir l'objet comestible, dans lequel la composition de poudre comestible comprend un constituant structurel, dans lequel le liquide comestible est fourni dans la forme de gouttelettes sur la composition de poudre comestible avant de le soumettre à l'étape d'irradiation laser de la procédure SLS, dans lequel les gouttelettes sont produites par pulvérisation ou impression, dans lequel le liquide comestible comprend de l'eau, dans lequel le constituant structurel comprend de l'amidon, dans lequel la température pendant l'étape d'irradiation laser de la procédure SLS se trouve dans l'intervalle de 100-200°C et la durée d'application est inférieure à 1 s, dans lequel la poudre de composition comestible comprend au moins 10 % en masse d'amidon.

2. Procédé selon l'une quelconque des revendications précédentes, dans lequel la composition de poudre comestible ne comprend pas de constituants qui deviennent aptes à l'écoulement dans les conditions de frittage sélectif au laser.

3. Procédé selon l'une quelconque des revendications précédentes, dans lequel le volume moyen de gouttelettes est inférieur à 0,1 mL, de préférence 1 pL-0,1 mL.

4. Procédé selon la revendication 1 ou 2, dans lequel le volume moyen de gouttelettes est 5 pL-0,01 mL.

5. Procédé selon l'une quelconque des revendications précédentes, dans lequel le liquide comestible est fourni dans la quantité d'au moins 1 % en masse par rapport à la masse totale de la composition de poudre et du liquide.

6. Procédé selon l'une quelconque des revendications précédentes, dans lequel la composition de poudre comestible comprend un constituant structurel, qui ne fond pas aux températures inférieures à 200°C.

7. Procédé selon l'une quelconque des revendications précédentes, dans lequel le liquide comestible est appliqué à la composition de poudre comestible par impression jet d'encre.

8. Procédé selon l'une quelconque des revendications précédentes, dans lequel le liquide comestible est fourni dans une quantité dans l'intervalle de 5-80 % en masse par rapport à la masse totale de la composition de poudre et du liquide.

9. Procédé selon l'une quelconque des revendications précédentes, dans lequel la composition de poudre comestible est une poudre s'écoulant librement.
